# EUROPÄISCHE PATENTANMELDUNG

(11) **EP 0 673 883 A2**
(43) Veröffentlichungstag der Anmeldung: **27.09.1995**
(21) Anmeldenummer: 95103553.4
(22) Anmeldetag: 11.03.1995
(51) Int. Cl.: C02F 1/461, C02F 1/465, C02F 1/46

(54) **Verfahren und Vorrichtung zum Aufbereiten von industriellen Abwässern im Wege der Elektrolyse**

(30) Priorität: 26.03.1994 DE 4410658
(71) Anmelder: WT - Wassertechnologie GmbH, D-42369 Wuppertal (DE)
(72) Erfinder: Witt, Willi, D-58285 Gevelsberg (DE)
(74) Vertreter: Honke, Manfred, Dr.-Ing.

(57) **Zusammenfassung**

Es handelt sich um ein Verfahren zum Aufbereiten von industriellen Abwässern im Wege der Elektrolyse, wonach das Abwasser an Gleichstrom beaufschlagten Elektroden vorbeigeführt wird. Die Elektroden werden mit Gleichstromimpulsen beaufschlagt. Ferner wird der Abwasserstrom impulsartig beschleunigt und mit erhöhter Fließgeschwindigkeit auf den Elektroden zwangsgeführt, so daß bei geringem Energieverbrauch und erhöhter Lebensdauer der Elektroden die Effizienz der Schadstoffelimination erheblich verbessert wird.

## Beschreibung

Die Erfindung betrifft ein Verfahren zum Aufbereiten von industriellen Abwässern im Wege der Elektrolyse, wonach das Abwasser in einem Elektrolysereaktor an Gleichstrom beaufschlagten Elektroden vorbeigefuhrt wird.

Es ist ein Verfahren zum Aufbereiten von industriellen Abwässern mittels Elektroflotation unter Verwendung von durch Elektrolyse sich verbrauchenden Elektroden aus Eisen und Aluminium bekannt, wonach das Abwasser Metall-Plattenpakete, deren plattenförmige Elektroden jeweils in Kaskaden angeordnet sind, mäanderförmig durchläuft. Durch die Aufeinanderfolge der Plattenpakete aus Eisen und Aluminium soll eine Flotation in einem weiten pH-Bereich erreicht, Chemikalienzusatz überflüssig gemacht und dennoch eine ausreichende Klärung erreicht werden. Im Zuge der Elektroflotation werden Metalle aus dem Abwasser ausoxidiert, Emulsionen gebrochen und Ölanteile in Schaumphase überführt. Tatsächlich werden durch die elektrolytische Wirkung zwischen den als Anoden und Kathoden eingesetzten Elektroden feine Gasbläschen erzeugt, wobei der freiwerdende Sauerstoff dazu dient, die im Abwasser befindlichen Substanzen zu oxidieren. Während die Gasbläschen die im Zuge der Oxidation gebildeten Flocken an die Oberfläche treiben, und dort ein Schaumbett entsteht, sinken schwere Schmutzpartikel auf den Boden, so daß zwischen dem oberen Schaumbett und dem unten Schwerschmutzanteil eine Klarphase entsteht. - Solche Verfahren zur Elektroflotation von Abwässern arbeiten mit Gleichstrom, wobei die Elektroden regelmäßig im Wege der Elektrolyse aufgelöst werden (vgl. DE-PS 36 41 365).

Der Erfindung liegt die Aufgabe zugrunde, ein Verfahren zum Aufbereiten von industriellen Abwässern der eingangs beschriebenen Ausführungsform anzugeben, wonach die Effizienz der Schadstoffelimination verbessert, die Lebenszeit der Elektroden verlängert und der Energieverbrauch reduziert werden. Außerdem soll eine zur Durchführung dieses Verfahrens besonders geeignete Vorrichtung geschaffen werden.

Diese Aufgabe löst die Erfindung in verfahrensmäßiger Hinsicht dadurch, daß die Elektroden mit Gleichstromimpulsen beaufschlagt werden. - Im Rahmen der Erfindung wird gleichsam mit einem getakteten Gleichstrom unter Berücksichtigung einer vorgegebenen Impulszahl gearbeitet. Infolge der impulsartigen Gleichstrombeaufschlagung der Elektroden bilden sich überraschenderweise mikroskopisch kleine Gasbläschen (Wasserstoff und Sauerstoff) als Folge der Wasserspaltung. Daraus wiederum resultiert ein verbessertes Ausoxidieren der im Abwasser befindlichen Schadstoffe. Das gelingt in optimaler Weise dann, wenn die Elektroden mit einer Impulsfolgefrequenz bis zu 800 Hz, mindestens bis zu 500 Hz beaufschlagt werden. Nach einem weiteren Vorschlag der Erfindung wird zugleich der Abwasserstrom impulsartig beschleunigt und mit erhöhter Fließgeschwindigkeit auf den Elektroden zwangsgeführt. Die impulsartige Beschleunigung des Abwasserstromes erfolgt mittels Pumpen und bei Eintritt des Abwasserstromes in den Elektrolysereaktor. Dabei lassen sich verhältnismäßig kurze Impulse verwirklichen. Auf diese Weise wird eine erhöhte Friktion des Abwasserstromes in den Oberfächenbereichen der Elektroden erreicht, so daß der Abwasserstrom dort eventuell angelagerte Substanzen und Gasbläschen mit sich reißt und die Bildung anbackender Klumpen verhindert, welche den Durchfluß des Abwasserstromes zwischen den Elektroden bzw. das elektrische Potential stören könnten. Tatsächlich wird auf diese Weise eine Erhöhung des Wirkungsgrades im Zuge der Ausflockung ebenso erreicht wie der Aufbau von isolierend wirkenden Belägen an den Elektrodenoberflächen infolge anbackender Verklumpungen verhindert, so daß kein erhöhter Energiebedarf zur Überwindung derartiger isolierend wirkender Schichten erforderlich ist. Hinzu kommt, daß die gepulste, erhöhte Fließgeschwindigkeit des Abwasserstromes durch den Elektrolysereaktor hindurch die Erhaltung der mikroskopisch kleinen und folglich besonders feinen Gasbläschen besorgt. Der dadurch erreichte Effekt der Oberflächenvergrößerung bewirkt eine verbesserte chemische Reaktion dieser Feinstbläschen mit den Schadstoffkomponenten und trägt folglich ebenfalls zur Erhöhung des Wirkungsgrades insbesondere in bezug auf die Ausflockung bei. Außerdem gewährleistet die Zwangsführung des Wasserstromes auf den Elektroden unter Berücksichtigung der gepulsten erhöhten Fließgeschwindigkeit eine gleichmäßige Umspülung und Kontaktaufnahme des Abwassers mit den gesamten Oberflächen der Anoden- und Kathodenplatten. Der ohnehin geschlossene Elektrolysereaktor und die gepulste hohe Fließgeschwindigkeit entlang der Elektroden verhindern im übrigen eine unerwünscht schnelle Separation der Gas- und Wasserphase sowie die Akkumulation der Gasbläschen an der Oberfläche der Elektroden. Dadurch wird eine erhöhte Ausnutzungsrate und Kontaktzeit der reaktiven Gasbläschen mit den Schadstoffkomponenten erreicht. - Nach einem weiteren Vorschlag der Erfindung, und diesem Vorschlag kommt selbständige Bedeutung zu, ist vorgesehen, daß die elektrische Leitfähigkeit des die in Abschnitte unterteilten Elektroden passierenden Abwasserstroms von Elektrodenabschnitt zu Elektrodenabschnitt gemessen wird und daß der an die einzelnen Elektrodenabschnitte angelegte Gleichstrom in Abhängigkeit von der jeweils gemessenen Leitfähigkeit des Abwassers unter Aufrechterhaltung einer im Bereich sämtlicher Elektrodenabschnitte gleichen Stromstärke von beispielsweise 5 Ampere/cm² geregelt wird. Insoweit wird eine reaktorinterne Stromzugabe über den Parameter elektrische Leitfähigkeit geregelt. Der Gleichstrom an den Elektroden wird gemäß dem im Abwasser gemessenen Potentialen variabel angelegt und im Bereich der einzelnen Elektrodenabschnitte verändert. So wird man am Eingang des Elektrolysereaktors regelmäßig mit geringen Spannungshöhe auskommen, am Ausgang des Elektrolysereaktors dagegen höhere Spannungshöhen benötigen, um eine gleichbleibende Stromdichte in den Bereich sämtlicher Elektrodenabschnitte zu gewährleisten. Dadurch wird eine optimale Energieausbeute und insbesondere eine gleichmäßige Abnutzung der Elektroden erreicht, so daß der Energieverbrauch reduziert und die Lebenszeit der Opferelektroden erhöht wird. Im ganzen wird eine derartige Erhöhung des Wirkungsgrades erreicht, daß die industrielle Abwasseraufbereitung nach dem erfindungsgemäßen Verfahren zur Durchführung im großtechnischen Maßstab geeignet ist. Stets kann auf die Zugabe von Chemikalien zur Stabilisierung der Flocken oder zur Minderung der Schaumbildung verzichtet werden. Als Schadstoffe lassen sich mit dem erfindungsgemäßen Verfahren solche Substanzen wie Schwermetalle, Farbstoffe, Öle, Fette, Lösungsmittel, Salze usw. eliminieren.

Gegenstand der Erfindung ist auch eine Vorrichtung mit zumindest einem Elektrolysereaktor mit Elektrodenplatten, die mit vorgegebenem Abstand in horizontaler oder vertikaler Ausrichtung parallel zueinander angeordnet sind und eine mäanderförmige Abwasserführung bilden, welche zur Durchführung des erfindungsgemäßen Verfahrens besonders geeignet ist. Diese Vorrichtung ist dadurch gekennzeichnet, daß zwischen den parallelen Plattenflächen der Elektrodenplatten mäanderförmige Führungskanäle gebildet sind und dadurch der Abwasserstrom auf den Parallelflächen in Mäanderform zwangsgeführt ist. Im Rahmen der Erfindung läßt sich anstelle der Mäanderform auch eine andere labyrinthähnliche Wasserführung verwirklichen. Jedenfalls resultiert aus der erfindungsgemäßen Zwangsführung, daß nicht nur zwischen den kaskadenartig angeordneten Elektrodenplatten eine mäanderförmige Abwasserführung erreicht wird, sondern außerdem auch auf den Plattenflächen der Elektrodenplatten selbst. Dadurch lassen sich verengte Durchflußquerschnitte verwirklichen, die unter Berücksichtigung einer gepulsten erhöhten Fließgeschwindigkeit die gleichmäßige Umspülung und Kontaktnahme des Abwassers mit den gesamten Oberflächen der Anoden- und Kathodenplatten bedingen. Das gelingt sowohl bei Horizontalbauweise als auch bei Vertikalbauweise. Zur Verwirklichung dieser Zwangsführung auf den Elektrodenplatten können die Elektrodenplatten jeweils auf ihrer einen Plattenseite mäanderförmig verlegte Führungsleisten aufweisen und mit ihrer anderen Plattenseite auf den Führungsleisten der benachbarten Elektrodenplatte aufgelagert sein, wobei die jeweils äußeren Elektrodenplatten des Plattenpaketes in entsprechender Weise zu den Reaktorwänden distanziert sind. - Weiter lehrt die Erfindung, daß dem Elektrolysereaktor eine mehrstufige Beruhigungsvorrichtung mit zwei oder mehreren hintereinander geschalteten Flockungsbehältern nachgeordnet ist und daß zumindest dem ersten Flockungsbehälter eine Berieselungsanlage zugeordnet ist. Die Abwasserführung durch die mehrstufige Beruhigungsvorrichtung bzw. deren Flockungsbehälter mit mittigem Zu- und Ablauf, Zirkulation in den Flockungsbehältern, bewirkt eine optimale Makroflockenbildung in der Beruhigungsphase. Mittels der Berieselungsanlage und Oberflächenbewegung im ersten Flockungsbehälter wird eine unerwünschte Schaumbildung an der Wasseroberfläche verhindert, so daß eine saubere, preiswerte und vereinfachte Feststoffentsorgung gewährleistet ist.

Im folgenden wird die Erfindung anhand einer lediglich ein Ausführungsbeispiel darstellenden Zeichnung näher erläutert; es zeigen:
- Fig. 1: eine Anlage zur Aufbereitung von industriellem Abwasser in schematischer Darstellung,
- Fig. 2: einen Elektrolysereaktor in Horizontalbauweise für den Gegenstand nach Fig. 1,
- Fig. 3: einen Schnitt A-B durch den Gegenstand nach Fig. 2 und
- Fig. 4: einen Vertikalschnitt durch einen Elektrolysereaktor in Vertikalbauweise für ebenfalls den Gegenstand nach Fig. 1.

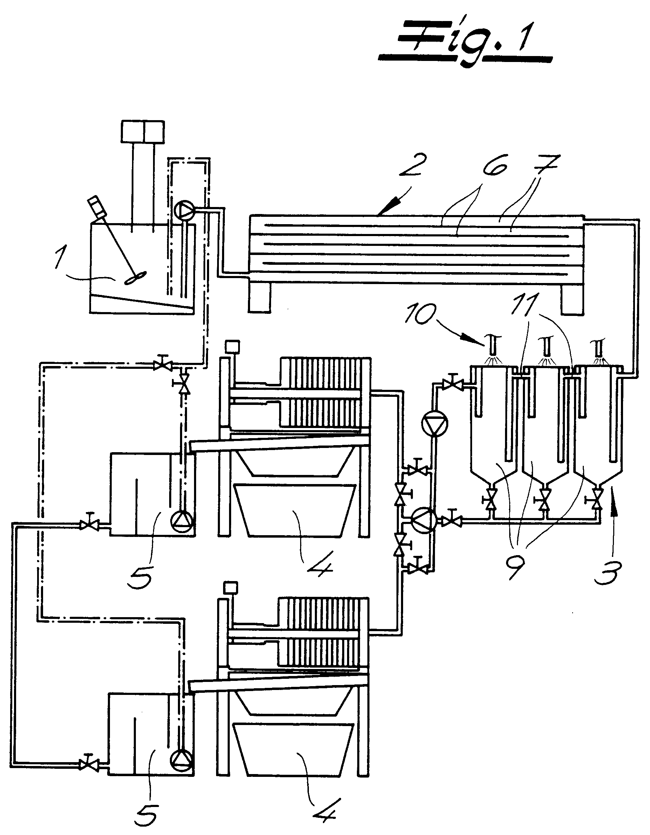

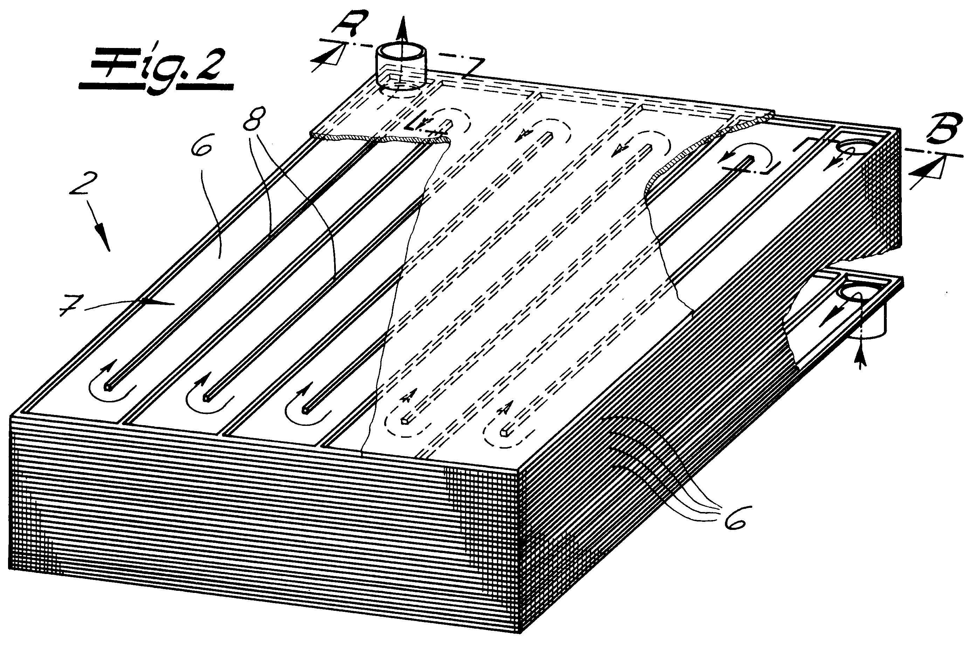

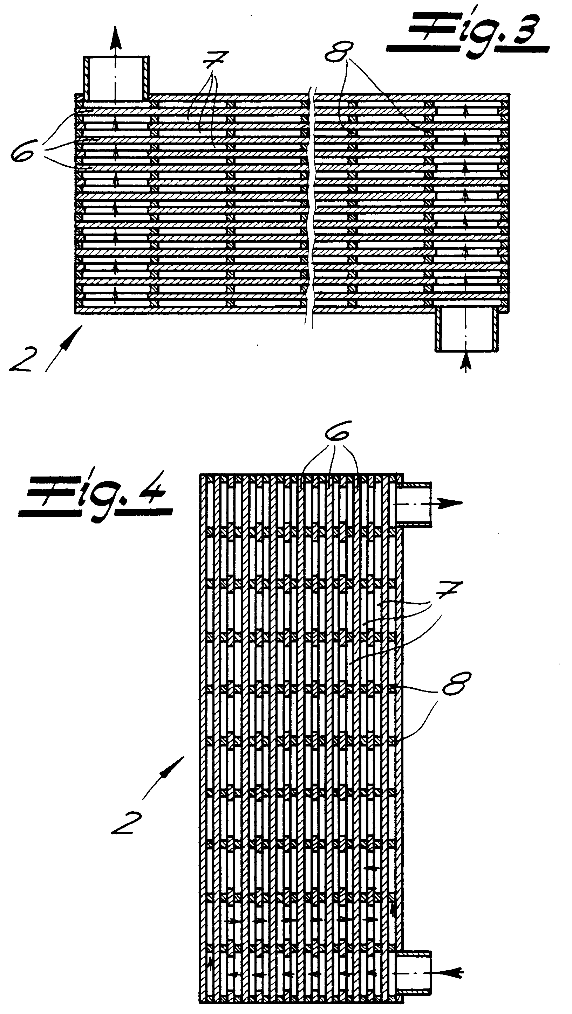

In den Figuren ist eine Anlage zur Aufbereitung von industriellem Abwasser dargestellt, die in ihrem grundsätzlichen Aufbau einen Neutralisationsbehälter 1, einen Elektrolysereaktor 2 und eine nachgeordnete Beruhigungsvorrichtung 3 aufweist, an die zwei Kammerfilterpressen 4 oder geeignete Zentrifugen und anschließend jeweils ein Klarwasserbehälter 5 angeschlossen sind. In dem Neutralisationsbehälter 1 wird der pH-Wert des ankommenden Abwassers erfaßt und gegebenenfalls das Abwasser neutralisiert. Anschließend wird das neutralisierte Abwasser in den Elektrolysereaktor 2 eingepumpt und dort an Gleichstrom beaufschlagten Elektroden 6 vorbeigeführt. Bei den Elektroden handelt es sich um Elektrodenplatten 6 bzw. Anoden- und Kathodenplatten, die mit vorgegebenem Abstand und nach dem Ausführungsbeispiel in horizontaler Ausrichtung parallel zueinander angeordnet sind und eine mäanderförmige Abwasserführung in bezug auf ihre kaskadenartige Anordnung bilden. Darüber hinaus sind zwischen den parallelen Plattenflächen der Elektrodenplatten 6 mäanderförmige Führungskanäle 7 gebildet, wodurch der Abwasserstrom auch auf den Plattenflächen selbst in Mäanderform zwangsgeführt ist. Die Elektrodenplatten 6 weisen auf ihrer einen Plattenseite mäanderförmig verlegte Führungsleisten 8 auf, während sie mit ihrer anderen Plattenseite auf den Führungsleisten 8 der jeweils benachbarten Elektrodenplatte 6 aufgelagert sind bzw. mit diesen Führungsleisten die Führungskanäle 7 bilden. Entsprechende mäanderförmige Führungskanäle 7 sind auch zwischen den zugeordneten Außenwänden des Elektrolysereaktors 2 und den im Plattenpaket außenliegenden Elektrodenplatten 6 verwirklicht. Dem Elektrolysereaktor 2 ist eine dreistufige Beruhigungsvorrichtung 3 mit drei hintereinander geschalteten Flockungsbehältern 9 nachgeordnet. Den Flockungsbehältern 9 ist eine Berieselungsanlage 10 zugeordnet, um eine optimale Makroflockenbildung unter Vermeidung von Schaumbildung an der Wasseroberfläche zu erreichen. Zwischen den einzelnen Flockungsbehältern 9 sind Überläufe 11 vorgesehen. Die Klarphase wird der ersten Kammerfilterpresse 4 zugeleitet (hohe Durchflußmenge), während die Schmutzphase der zweiten Kammerfilterpresse 4 (kleinere Durchflußmenge) zugeführt wird.

## Patentansprüche

1. Verfahren zum Aufbereiten von industriellen Abwässern in einem Elektrolysereaktor an Gleichstrom beaufschlagten Elektroden vorbei-geführt wird, **dadurch gekennzeichnet,** daß die Elektroden mit Gleichstromimpulsen beaufschlagt werden.

2. Verfahren nach Anspruch 1, dadurch gekennzeichnet, daß die Elektroden mit einer Impulsfolgefrequenz bis zu 800 Hz, mindestens bis zu 500 Hz beaufschlagt werden.

3. Verfahren nach Anspruch 1 oder 2, dadurch gekennzeichnet, daß der Abwasserstrom impulsartig beschleunigt und mit erhöhter Fließgeschwindigkeit auf den Elektroden zwangsgeführt wird.

4. Verfahren nach einem der Ansprüche 1 bis 3, dadurch gekennzeichnet, daß der Abwasserstrom in kurzen Impulsen beim Eintritt in den Elektrolysereaktor beschleunigt wird.

5. Verfahren nach einem der Ansprüche 1 bis 4, dadurch gekennzeichnet, daß die elektrische Leitfähigkeit des die in Abschnitte unterteilten Elektroden passierenden Abwasserstroms von Elektrodenabschnitt zu Elektrodenabschnitt gemessen wird und daß der an die einzelnen Elektrodenabschnitte angelegte Gleichstrom in Abhängigkeit von der jeweils gemessenen Leitfähigkeit des Abwassers unter Aufrechterhaltung einer im Bereich sämtlicher Elektrodenabschnitte optimalen Stromdichte geregelt wird.

6. Vorrichtung zur Durchführung des Verfahrens nach einem der Ansprüche 1 bis 5, mit zumindest einem Elektrolysereaktor mit Elektrodenplatten, die mit vorgegebenem Abstand in horizontaler oder vertikaler Ausrichtung parallel zueinander angeordnet sind und eine mäanderförmige Abwasserführung bilden, dadurch gekennzeichnet, daß zwischen den parallelen Plattenflächen der Elektrodenplatten (6) mäanderförmige Führungskanäle (7) gebildet sind und dadurch der Abwasserstrom auf den Plattenflächen in Mäanderform zwangsgeführt ist.

7. Vorrichtung nach Anspruch 6, dadurch gekennzeichnet, daß die Elektrodenplatten (6) auf ihrer einen Plattenseite mäanderförmig verlegte Führungsleisten (8) aufweisen und mit ihrer anderen Plattenseite auf den Führungsleisten (8) der benachbarten Elektrodenplatte (6) aufgelagert sind.

8. Vorrichtung nach Anspruch 6 oder 7, dadurch gekennzeichnet, daß dem Elektrolysereaktor (2) eine mehrstufige Beruhigungsvorrichtung (3) mit zwei oder mehreren hintereinander geschalteten Flockungsbehältern (9) nachgeordnet ist und daß zumindest dem ersten Flockungsbehälter eine Berieselungsanlage (10) zugeordnet ist.

9. Vorrichtung nach einem der Ansprüche 6 bis 8, dadurch gekennzeichnet, daß die Flockungsbehälter (9) in vorgegebener Behälterhöhe mittels Überläufe (11) zum Abzug der Klarphase miteinander verbunden sind.
